# EUROPÄISCHE PATENTSCHRIFT

(11) **EP 1 607 431 B1**
(45) Veröffentlichungstag und Bekanntmachung des Hinweises auf die Patenterteilung: **20.08.2008**
(21) Anmeldenummer: 05010839.8
(22) Anmeldetag: 19.05.2005
(51) Int. Cl.: C08J 5/18, C08L 23/02, B32B 27/32

(54) **Blends aus Styrol-Butadien-Blockcopolymeren und Polyolefine für transparente, elastische Folien**
Blends of styrene/butadiene block copolymers and polyolefines for transparent and elastic films
Feuille élastique transparent en matière plastique avec mélange des copolymérisats séquences de styrène/butadiène et des polyolefines

(30) Priorität: 17.06.2004 DE 102004029138
(43) Veröffentlichungstag der Anmeldung: 21.12.2005
(73) Patentinhaber: BASF SE, 67056 Ludwigshafen (DE)
(72) Erfinder: Huber, Robert, 67117 Limburgerhof (DE)

(56) Entgegenhaltungen:
- WO-A-96/23823
- US-A- 4 479 989
- US-A- 5 972 519
- US-A- 6 124 428

## Beschreibung

Die Erfindung betrifft eine Stretchfolie, enthaltend mindestens eine Schicht, welche aus den Komponenten
A) 60 ― 80 Gew.-% eines thermoplastischen Elastomer auf Basis von Styrol (S-TPE)
B) 20 ― 40 Gew.-% eines Polyolefins, ausgewählt aus einem Ethylen-Vinylacetat-Copolymerisat (EVA) oder Ethylen-Acryl-Copolymerisat besteht,
sowie deren Verwendung zum Verpacken von Stückgut.

Zum Verpacken von Stückgut mit Stretchhauben- oder Stretchwickelmaschinen werden in der Regel ein- oder mehrschichtige, elastisch dehnbare Folien aus Polyolefinen, wie sie beispielsweise in EP-A 1 201 406 beschrieben, eingesetzt.

Die bislang für die Stretchhaubenverpackung eingesetzten Folienschläuche weisen häufig ein zu geringes Rückstellvermögen auf. Bei einer bestimmten Größe des Folienschlauchen ist man daher auf eine eng begrenzte Größe des zu verpackenden Stückgutes beschränkt.

Die US 4,479,989 beschreibt einen flexiblen Film für Blutbehälter, welcher 30 bis 90% eines linearen Polyethylen niedriger Dichte (LLDPE) und 10 bis 70% eines Styrol-Ethylen-Butylen-Styrol-Blockcopolymeren enthält und bei Temperaturen von bis zu 120° Celsius sterilisiert werden kann.

Aus US 6,124,428 ist ein Verfahren zur Herstellung eines Filmes aus einem linearen Polyethylen oder dessen Blend mit einem Elastomeren auf Basis von Styrol und Butadien bekannt, dem zur Verbesserungen der Verarbeitbarkeit ein Sulfonatsalz als oberflächenaktive Substanz zugegeben wird.

Styrol-Butadien-Stryol-Blockcopolymere zeigen ein sehr gutes Rückstellvermögen, neigen aber aufgrund des Butadienblockes zu Vernetzung und Stippenbildung. US 5,972,519 und WO 96/23823 beschreiben flexible, transparente Folien aus Styrol-Butadien-Blockcopolymeren mit einem statistischen Styrol/Butadien-Copolymerblock für die Lebensmittelverpackung.

Aufgabe der vorliegenden Erfindung ist es, den genannten Nachteilen abzuhelfen und stippenfreie Folien mit hohem Rückstellvermögen bereitzustellen, die auch bei geringen Foliendicken eine ausreichende Durchstoßfestigkeit aufweisen und insbesondere als Stretchfolien für das Verpacken von Stückgut geeignet sind.

Demgemäß wurde die eingangs beschriebene Stretchfolie gefunden.

### Komponente A

Bevorzugt weist das S-TPE eine Reißdehnung von mehr als 300 %, besonders bevorzugt mehr als 500 %, insbesondere mehr als 600 %, gemessen nach ISO 527, auf und wird in einer Menge im Bereich von 40 bis 95 Gew.-%, bevorzugt 60 bis 80 Gew.-%, bezogen auf die Stretchfolie, zugemischt. Besonders bevorzugt mischt man als S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ zu.

Der Gesamtbutadiengehalt liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew-%.

Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 - 16 %.

### Komponente B

Als Komponente B wird Ethylen-Vinylacetat-Copolymerisat (EVA) oder Ethylen-Acryl-Copolymerisat eingesetzt.

Die erfindungsgemäße Stretchfolie kann darüber hinaus die üblichen Hilfs- und Zusatzstoffe, Wie Gleitmittel, Antiblockmittel, Trennmittel, Stabilisatoren, Antistatika, Flammschutzmittel, Farbmittel etc. enthalten.

Die erfindungsgemäße Stretchfolie kann auch mehrschichtig aufgebaut sein, mindestens eine Schicht aus den Komponente A und B besteht. Die übrigen Schichten können aus Polyolefinen, beispielsweise teilkristalline Polyolefine, wie Homo- oder Copolymerisate von Ethylen, Propylen, Buten-1, Penten-1, Hexen-1, 4-Methyl-penten-1 sowie Ethylencopolymerisate mit Vinylacetat, Vinylalkohol, Ethylacrylat, Butyl-acrylat oder Methacrylat, High-Density-Polyethylen (HDPE), Low-Density-Polyethylen (LDPE), Linear-Low-Density-Polyethylen (LLDPE), Polypropylen (PP), Ethylen-Vinylacetat-Copolymerisat (EVA) oder Ethylen-Acryl-Copolymerisat oder Mischungen davon bestehen.

In der Regel weist die erfindungsgemäße Stretchfolie eine Gesamtfoliendicke im Bereich von 1 bis 250 µm, bevorzugt eine Dicke im Bereich von 50 bis 150 µm auf.

Die erfindungsgemäße Stretchfolie kann nach geeigneten Verfahren wie Mono- und Coextrusion zu Schlauchfolien, Chill-Roll-Folien oder Breitschlitzfolien durch Kalandrieren, Spritzgießen oder Blasformen hergestellt werden.

Stretchverpackungen sind vorteilhaft, wenn es darum geht, Produkte unregelmäßiger Form - wie bei Gütern auf Paletten oder Lebensmittel - wasserdicht mit Folie zu ummanteln. Ein System, das schneller und variabler einzusetzen ist, als die übliche Schrumpf- oder Wickeltechnik. Die erfindungsgemäße Stetchfolie eignet sich aufgrund ihrer hohen Rückstellkraft und Durchstoßfestigkeit insbesondere zur Verpackung von Stückgut, wobei man die Stretchfolie über das Stückgut zieht. Geeignete Verfahren und Vorrichtungen hierfür sind beispielsweise in WO 03/062062 oder EP-A 1 059 233 beschrieben.

Aufgrund des hohen Dehnungs- und Rückstellvermögens sind die erfindungsgemäßen Stretchfolien herkömmlichen Polyethylen-Folien deutlich überlegen. Je höher der Anteil der Komponente A, desto höher ist das Rückstellvermögen. Bei hohem Anteil der Komponente A kann somit der Schlauchdurchmesser um über 50% reduziert werden und damit die Verpackung leichter gemacht werden, wobei sich derartige Stretchfolien trotzdem an das zu verpackende Gut anschmiegen. Stretchfolien mit einem Anteil von über 70 Gew.-% Komponente A können sich bei 500% Ausgangsdehnung um über 300% zurückstellen, während bei optimierten Polyethylenfolien lediglich ca. 100% Rückstellung erreicht werden.

Ein weiterer Vorteil liegt darin, dass die erfindungsgemäße Stretchfolie auf Grund ihres Rückstellvermögens mit einer Folienschlauchgröße unterschiedliche Packgutgrößen abdecken kann. Damit vermindern Verpacker nicht nur ihre Zykluszeiten, da kein Schlauchwechsel mehr nötig wird, sondern senken auch ihre Lagerkosten, da nur noch eine Schlauchgröße vorzuhalten ist. Aufgrund des geringeren Gewichtes fallen auch weniger Entsorgungskosten an.

### Beispiele:

### Einsatzstoffe:

- LDPE:: LD 150, Low-Density Polyethylen der Fa. Exxon Mobil (Dichte 0,923 g/cm3, MFR (190°C/2.16 kg) 0,75 g/10 min)
- EVA: Lucalen V 3510 K, Ethylen-Vinylacetat-Copolymer mit 18% Vinylacetat der Fa. Basell (Dichte 0,94 g/cm3, MFR (190°C/2.16 kg) 0,7 g/10 min)
- EBA: FA 4083, Ethylen-Butylacrylat-Copolymer der Fa. Borealis (Dichte 0,924 g/cm3, MFR (190°C/2.16 kg) 0,5 g/10 min, Butylacrylat-Gehalt 8%)
- SB: Styroflex^{®} 2G66 (Thermoplastisches Elastomer auf Basis eines Styrol-Butadien-Blockcopolymeren mit statistischem S/B-Mittelblock der BASF Aktiengesellschaft)

### Prüfmethoden:

Die Probekörper für die mechanischen Prüfungen wurden längs und quer aus den Folien geschnitten. E-Modul, Bruchspannung und Reißdehnung wurden im Zugversuch nach ISO 527-2 bestimmt.

Die Messung der Bruchdehnung (Puncture Resistance Test) erfolgte nach Normvorschlag FNK 403.3.

Verfahren zur Bestimmung der Rückstellung nach 500% Ausgangsdehnung (Hysterese)
1. Probe auf Vorkraft 0,1 N ziehen
2. Mit Prüfgeschwindigkeit 500 mm/min bis Dehnungsstufe 100 % ziehen; 20s halten dabei Dehnung konstant
3. Entlasten mit 500 mm/min auf Vorkraft; Dehnungspunkt Epsilon - a (Anfang der Erholungszeit registrieren)
4. Entlasten auf Dehnung 0 % ; 180s warten (Erholungszeit)
5. Belasten bis Vorkraft und Dehnungspunkt Epsilon - b (Ende der Erholungszeit) registrieren
6. Differenz a - b berechnen
7. Weitere Dehnungsstufen 250 und 500 % mit dem selben Probekörper anfahren (Ablaufpunkte 2 - 6 wiederholen)

Prüfverfahren zur Bestimmung der Rückstellkraft (Hysterese):
1. Probe auf Vorkraft 1 N ziehen
2. Mit Prüfgeschwindigkeit 500 mm/min bis Dehnungsstufe 100, 250, 500 % ziehen
3. 20 s warten; dabei Dehnung konstant halten; Kraft am Anfang (FA) und am Ende der Wartezeit (FB) registrieren
4. Entlasten mit 500 mm/min auf Dehnungsstufe 50, 125, 250 %
5. 3 min warten; dabei Dehnung konstant halten; Kraft am Anfang (Fc) und am Ende der Wartezeit (Fd) registrieren
6. Auf Vorkraft entspannen
7. Darstellung von Kraft über Dehnung
8. Prüfung mit den Dehnungsstufen 100,250 und 500%
9. Messung der Probendicke vor und nach der Prüfung

### Herstellung der Folien:

Die einschichtigen Folien wurden durch Blasextrusion hergestellt. Zusammensetzung und Eigenschaften der erfindungsgemäßen Folien F2 und F3 und Vergleichsfolien (VF) sind in der Tabelle 1 zusammengestellt.

**Tabelle 1:**

| Beispiel | Zusammensetzung [Gew.-%] | Rückstellung nach 500% Dehnung [%] | Rückstellkraft nach 250 % Dehnung und 125% Rückstellung [N] (I/q) | Weiterreißfestigkeit DIN 53363 [N/mm] (I/q) | Puncture Resistance [N/mm] |
|---|---|---|---|---|---|
| VF2 | SB 100 | 390 | 2,1/1,8 | 103/87 | 120 |
| VF1 | LDPE/SB 30/70 | 270 | 1,5/1,8 | 153/113 | 90 |
| F2 | EVA/SB 30/70 | 330 | 1,8/2,0 | 131/103 | 122 |
| F3 | EBA/SB 30/70 | 300 | 1,6/1,9 | 135/102 | 93 |

## Patentansprüche

1. Stretchfolie, enthaltend mindestens eine Schicht, welche aus den Komponenten
A) 60 ― 80 Gew.-% eines thermoplastischen Elastomer auf Basis von Styrol (S-TPE) und
B) 20 ― 40 Gew.-% eines Polyolefins, ausgewählt aus einem Ethylen-Vinylacetat-Copolymerisat (EVA) oder Ethylen-Acryl-Copolymerisat
besteht.

2. Stretchfolie nach Anspruch 1, **dadurch gekennzeichnet, dass** die Komponente A) ein Styrol-Butadien-Blockcopolymer der Struktur S-(S/B)-S, wobei S für einen Polystyrolblock und S/B für einen Styrol- Butadien-Copolymerblock steht, ist.

3. Stretchfolie nach einem der Ansprüche 1 oder 2, **dadurch gekennzeichnet, dass** die Komponente A) aus 15 bis 50 Gew.-% Butadien und 50 bis 85 Gew.-% Styrol aufgebaut ist.

4. Stretchfolie nach einem der Ansprüche 2 oder 3, **dadurch gekennzeichnet, dass** der Styrol-Butadien-Copolymerblock S/B der Komponente A) eine statistische Verteilung der Styrol- und Butadieneinheiten aufweist.

5. Stretchfolie nach einem der Ansprüche 2 bis 4, **dadurch gekennzeichnet, dass** der Styrol-Butadien-Copolymerblock (S/B) der Komponente A) aus 30 bis 70 Gew.-% Styrol und 25 bis 70 Gew.-% Butadien aufgebaut ist.

6. Stretchfolie nach einem der Ansprüche 2 bis 5, **dadurch gekennzeichnet, dass** der Anteil der Polystyrolblöcke S im Bereich von 5 bis 40 Gew.-% liegt.

7. Stretchfolie nach einem der Ansprüche 2 bis 6, **dadurch gekennzeichnet, dass** der 1,2-Vinylgehalt im Styrol-Butadien-Copolymerblock (S/B) der Komponent A) unter 20 % beträgt.

8. Stretchfolie nach einem der Ansprüche 1 bis 7, **dadurch gekennzeichnet, dass** sie eine Dicke im Bereich von 1 bis 250 µm aufweist.

9. Mehrschichtige Folie, enthaltend mindestens eine Schicht aus einer Stretchfolie gemäß einem der Ansprüche 1 bis 8.

10. Verfahren zur Verpackung von Stückgut, **dadurch gekennzeichnet, dass** man eine Stretchfolie gemäß einem der Ansprüche 1 bis 8über das Stückgut zieht.

## Claims

1. A stretch film comprising at least one layer which consists of the components
A) from 60 to 80% by weight of a thermoplastic elastomer based on styrene (S-TPE) and
B) from 20 to 40% by weight of a polyolefin selected from an ethylene-vinyl acetate copolymer (EVA) or ethylene-acrylic copolymer.

2. The stretch film according to claim 1, wherein component A) is a styrene-butadiene block copolymer of S-(S/B)-S structure, where S is a polystyrene block and S/B is a styrene-butadiene copolymer block.

3. The stretch film according to claim 1 or 2, wherein component A) is composed of from 15 to 50% by weight of butadiene and from 50 to 85% by weight of styrene.

4. The stretch film according to claim 2 or 3, wherein the styrene-butadiene copolymer block S/B of component A) has random distribution of the styrene units and butadiene units.

5. The stretch film according to any of claims 2 to 4, wherein the styrene-butadiene copolymer block (S/B) of component A) is composed of from 30 to 70% by weight of styrene and from 25 to 70% by weight of butadiene.

6. The stretch film according to any of claims 2 to 5, wherein the proportion of the polystyrene blocks S is in the range from 5 to 40% by weight.

7. The stretch film according to any of claims 2 to 6, wherein the 1,2-vinyl content in the styrene-butadiene copolymer block (S/B) of component A) is below 20%.

8. The stretch film according to any of claims 1 to 7, whose thickness is in the range from 1 to 250 µm.

9. A multilayer film comprising at least one layer composed of a stretch film according to any of claims 1 to 8.

10. A process for the packaging of product units, which comprises drawing a stretch film according to any of claims 1 to 8 over the product units.

## Revendications

1. Feuille étirable, contenant au moins une couche qui est constituée par les composants
A) 60 - 80% en poids d'un élastomère thermoplastique à base de styrène (S-TPE) et
B) 20 - 40% en poids d'une polyoléfine, choisie parmi un copolymère d'éthylène-acétate de vinyle (EVA) ou un copolymère d'éthylène-acryle.

2. Feuille étirable selon la revendication 1, **caractérisée en ce que** le composant A) est un copolymère à blocs de styrène-butadiène de structure S-(S/B)-S, où S représente un bloc de polystyrène et S/B un bloc de copolymère styrène-butadiène.

3. Feuille étirable selon l'une quelconque des revendications 1 ou 2, **caractérisée en ce que** le composant A) est constitué par 15 à 50% en poids de butadiène et 50 à 85% en poids de styrène.

4. Feuille étirable selon l'une quelconque des revendications 2 ou 3, **caractérisée en ce que** le bloc de copolymère de styrène-butadiène S/B du composant A) présente une répartition statistique des unités styrène et butadiène.

5. Feuille étirable selon l'une quelconque des revendications 2 à 4, **caractérisée en ce que** le bloc de copolymère de styrène-butadiène (S/B) du composant A) est constitué par 30 à 70% en poids de styrène et 25 à 70% en poids de butadiène.

6. Feuille étirable selon l'une quelconque des revendications 2 à 5, **caractérisée en ce que** la proportion de blocs de polystyrène S se situe dans la plage de 5 à 40% en poids.

7. Feuille étirable selon l'une quelconque des revendications 2 à 6, **caractérisée en ce que** la teneur en 1,2-vinyle dans le bloc de copolymère de styrène-butadiène (S/B) du composant A) est inférieure à 20%.

8. Feuille étirable selon l'une quelconque des revendications 1 à 7, **caractérisée en ce qu'**elle présente une épaisseur dans la plage de 1 à 250 µm.

9. Feuille à plusieurs couches contenant au moins une couche en une feuille étirable selon l'une quelconque des revendications 1 à 8.

10. Procédé pour l'emballage de marchandises de détail, **caractérisé en ce qu'**on tire une feuille étirable selon l'une quelconque des revendications 1 à 8 sur les marchandises de détail.
